# EUROPEAN PATENT SPECIFICATION

(11) **EP 2 656 739 B1**
(45) Date of publication and mention of the grant of the patent: **28.06.2017**
(21) Application number: 13382142.1
(22) Date of filing: 18.04.2013
(51) Int. Cl.: A23L 3/358, A23B 4/023

(54) **Food preparation**
Lebensmittelzubereitung
Préparation alimentaire

(30) Priority: 23.04.2012 ES 201230598
(43) Date of publication of application: 30.10.2013
(73) Proprietor: Sal Costa, S.A., 08040 Barcelona (ES)
(72) Inventor: Casanova Marti, Ignacio, 08173 Sant Cugat del Valles (ES)
(74) Representative: Sugrañes Patentes y Marcas

(56) References cited:
- EP-A1- 0 547 783
- WO-A1-03/024253
- WO-A1-2011/009969
- US-A- 4 518 618
- US-A- 5 380 545

## Description

### Technical Field of the Invention

The invention relates to a food preparation comprising a food product housed in a closed and ovenable container. Hence, the invention belongs to the field of prepared fast foods, exempting the user or diners from handling the foods or dirtying kitchen utensils for the preparation thereof.

### Background of the Invention

Various proposals of food preparations for quick consumption that do not need handling prior to consumption are known today. Such is the case, for example, of salads or other products that can be eaten raw.

Document WO 2011/09969 describes a method for removing water from food product that may previously have been frozen in a package that comprises wrapping the product in a permeable film and then placing a sequestering layer at least in the base of the product. The sequestering layer may comprise salt.

Various proposals of food preparations that require cooking prior to consumption are also known. Such is the case, for example, of frozen fish or of certain stews which include pieces of meat and an accompanying sauce with different tastes to choose from. To make these originally raw foods edible, these foods can conventionally be subjected to boiling or to the action of steam. Alternatively, the food can also be fried, for example, in oil. Cooking by boiling or cooking various fried foods necessarily requires removing the food product from the container protecting it for its storage and transport. Furthermore, utensils such as a pot or a paella pan are used for cooking the food, which means that these utensils will have to be cleaned to be used again later.

As an alternative, pre-cooked food preparations which can be heated in a microwave oven without the need of having to remove them from the container containing them, are known. These proposals solve the drawback of having to food product without it being removed from the container containing it, avoiding dirtying any kitchen utensils for the preparation thereof, and on the other hand, is healthy as it does not require the use of fats for cooking.

Another objective of the invention is a food preparation suitable for fulfilling the requirements described above even when the food product comprises a piece of fish or frozen meat.

### Summary of the Invention

The food preparation according to the invention comprises a food product, housed in a closed and ovenable container, intended for being sold fresh, frozen or refrigerated.

The preparation is essentially characterized in that the food product is embedded in salt, an ovenable sheet covering at least partially said product being arranged between the product and the salt and in that the container is suitable for revealing or uncovering its content in the upper portion.

The ovenable sheet keeps the food product from direct and excessive contact with the salt, preventing the salt melted due to the effect of the heat or of the steams released from the food product during cooking from being able to penetrate into said food product, salting it excessively in an undesired manner.

According to the invention, the food preparation is suitable for being able to be cooked in an oven in which the container containing the food product is placed directly. As the temperature in the oven increases, the salt will harden forming a crust, which causes the food to cook inside the cavity formed by the salt, the steams released during cooking being retained inside the cavity.

This method of cooking is very healthy because it is not necessary to include fats since the foods are cooked in their own juice. Additionally, the salt which is in contact with the food absorbs the fats that the food may contain and release during cooking, offering as a result a very juicy, delicious and light dish.

In the context of the present invention, any material suitable for being introduced at least in an electric oven, a gas oven or a microwave oven and withstanding the cooking temperatures is considered as ovenable.

The conventional method of cooking by baking in a salt crust has several difficulties in terms of its preparation and generally foods cooked by baking in a salt crust are prepared at the time when they are to be consumed. Likewise, this type of cooking is limited to whole pieces of food with intact skin and is not viable for the preparation of skinned foods, pre-packed or previously prepared in individual portions, because these would be too salty for consumption and the salt would adhere to the food. Using wet salt for cooking by baking in a salt crust is especially problematic since, in addition to having to use part of the oven energy to dry the salt, losing time and money, the salt tends to adhere to the skin of the fish, worsening the end result.

The invention provides an easy to cook and consume food preparation. Once the consumer has bought the preparation, he/she only needs to supply the heat necessary for cooking the preparation and the consumer can then consume the food directly without the process of removing the salt becomes complicated, the risk of breaking the piece of food, the salt adhering to the product or the food being too salty.

Advantageously, the ovenable sheet of the preparation according to the invention allows contemplating the use of clean pieces of fish or skinned or scaled pieces of fish. Accordingly, the preparation is compatible with the conventional frozen food industry such that individual pieces of fish such as those which are available on the market can be used.

For this reason, in one variant of the invention the food product is selected from the group consisting of a frozen piece of skinned fish, a skinned whole fish, meat, cephalopods, seafood or vegetables.

The invention contemplates that this ovenable sheet is perforated.

In one variant of the invention, the ovenable sheet is configured like a bag, in which the food product which is completely enclosed by said sheet is introduced.

In another variant of the invention, two ovenable sheets are used: a first lower sheet placed below the food product and on a layer of salt; and a second upper sheet enveloping the surface of the food product not covered by the first sheet. A portion of the sheet covering the top of the food product is accessible from the outside of the salt, said portion being able to be held with fingers for pulling it and lifting the layer of salt covering it in the upper portion for uncovering the food product.

According to another feature of the invention, before enclosing the food product in the container, a liquid is sprayed on the salt covering said food product in order for a crust to form on the outer surface of the salt during baking.

In the culinary sector, there is a tendency to think that the crust must be as leaktight as possible so that the food is cooked therein without losing its juice, preserving the nutrients of the ingredient cooked. Nevertheless, an ideal way for forming the layer of salt which produces this effect while at the same time prevents the salt from penetrating into the food, is unknown. Furthermore, the use of fine salt can cause the product to be too salty after cooking even when an ovenable sheet protecting the food product is used because the dissolved fine salt can go through the perforations of the ovenable sheet. In contrast, the use of coarse salt will allow discharging the steam through the gaps existing between the grains.

The inventors have found that an ideal combination of coarse salt and fine solve solves these drawbacks. For this reason, in one variant of the invention the salt comprises a mixture of coarse salt and fine salt.

More specifically, in one embodiment the salt used is a salt more than 70% of the grains of which is greater than 1.6 mm, whereas the remaining grains are grains having a size less than 1.6 mm.

The invention also contemplates that a layer of animal or plant fat, on which the ovenable sheet is arranged, is applied on the food product.

According to another feature of the invention, the container is provided with means for collecting the salt which is removed for uncovering the food product before moving it to a final dish for consumption. Accordingly, dirtying table accessories such as dishes for the preparation of the food product after taking it out from the oven is also prevented.

In one embodiment, the container comprises an outer tray or receptacle in which there is arranged a second inner tray on which the salt and the food product are deposited, the outer tray being suitable for collecting the salt which is removed for uncovering the food product before moving it to a final dish for consumption.

### Brief Description of the Drawings

Figures 1 to 5 are respective schematic views of respective food preparations contemplated by the invention; and
Figure 6 is a schematic view showing the effect produced by a preferred mixture of salt according to a preferred variant of the invention.

### Detailed Description of the Invention

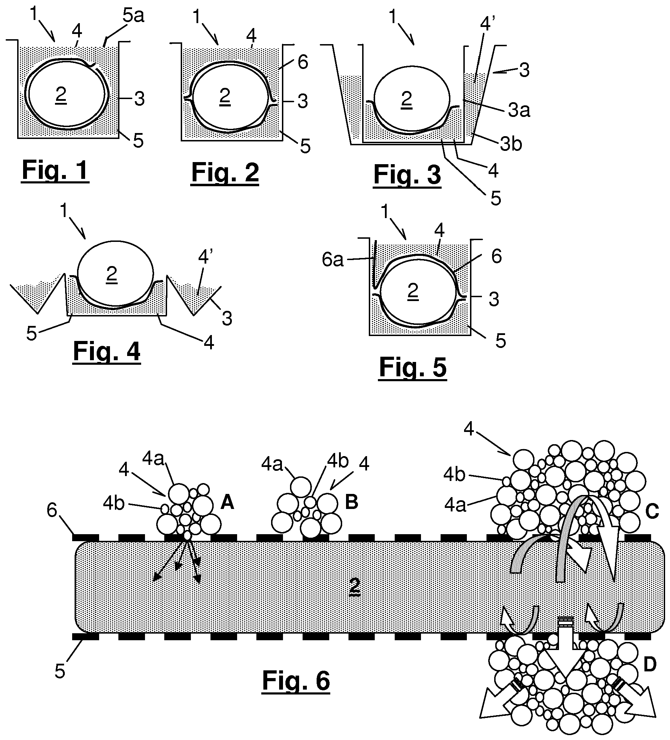

The invention discloses a food preparation (1) comprising a food product (2) housed in a closed and ovenable container (3), intended for being sold fresh, frozen or refrigerated, the food product (2) is embedded in salt (4), an ovenable sheet (5, 6) covering at least partially said product being arranged between the food product and the salt, the container is suitable for revealing or uncovering its content in the upper portion, characterized in that a portion (5a or 6a) of the sheet (5 or 6) covering the top of the food product (2) is accessible from the outside of the salt (4), said portion being able to be held with fingers for pulling it and lifting the layer of salt covering it in the upper portion for uncovering the food product (2). Figures 1 to 5 show different variants of a food preparation 1 according to the invention. All the variants have in common the use of an ovenable container 3 forming a bottom configured like a tray and containing a food product 2 embedded in a handful of salt 4. In all cases, the food product 2 is enclosed and kept from direct and excessive contact with the salt by means of one or several ovenable sheets 5.

In the variant of Figure 1, the food product 2 is completely enclosed by a single piece of ovenable sheet 5 from which protrudes, on top of the layer of salt 4 arranged above the food product 2, a portion 5a intended for being held with fingers for uncovering the food product 2 and simultaneously removing the layer of salt covering it; and in Figure 2, the food product 2 is completely covered by means of two ovenable sheets one of which is a lower sheet 5 on which the food product 2 rests and the other is an upper sheet 6 covering the food product. Figure 5 shows an alternative to the variant of Figure 2, in which the upper sheet 6 is provided with a portion 6a that can be held with fingers to perform the same function as the portion 5a that can be held of sheet 5 of Figure 1.

Although not depicted, the containers 3 are closed in the upper portion, for example, by an oxygen impermeable film or sheet, sealed at the upper edge of the part in the form of a tray.

Naturally, it is envisaged that several condiments, such as spices, natural or artificial flavorings or others, can be put on the food product.

Figures 3 and 4 show two alternatives to provide the container 3 with means for collecting the salt 4' which is removed for uncovering the food product 2. The solution used in the example of Figure 3 consists of arranging two trays one of which is an inner tray 3b containing the salt 4 and the food product 2 and the other is an outer tray 3a, sized to be able to house the salt 4' covering the food product between the sides walls of both inner and outer trays 3b and 3a, respectively. Figure 4 shows an alternative in which a single tray is provided halfway with a flexible hinge which allows pivoting the upper part of its flaps outward for collecting the aforementioned salt 4'.

Figure 6 shows a detail view of any one of the aforementioned variants in which the effect exerted by a preferred mixture of coarse salt and fine salt on the food product 2, specifically when the food product is protected by one or two ovenable, perforated sheets 5, 6, is shown.

The letter A illustrates how fine grains 4a of salt 4 can contact the food product 2 through the perforations of the sheet 6, such that the juice released by the food product during cooking melts these fine grains 4a which are contacting the food product 2 and lightly salt the food product.

The letter B shows the effect exerted by the coarse grains 4a of salt 4, the arrangement and larger size of which block the perforations of the sheet 6, blocking the passage of the fine grains 4b susceptible of melting during cooking and preventing their direct contact with the food product 2, such that they cannot salt the food product, all this allowing the exit of the steams from the cooking.

The letter C shows how the fine grains 4b of salt 4 block the gaps existing between the coarse grains 4a, a barrier which does not allow the steams of the food product 2 to be released to the outside being formed. This causes the food product to cook in its own steam.

The letter D shows what happens below the food product 2. In this case, the aforementioned barrier does not allow the steams to be discharged to the outside but allows the liquids which can be released from the food product 2, especially if the food product has been kept frozen, to pass partially. This fact encourages the product to recover the organoleptic properties which characterized it before being subjected to freezing.

It should be noted that the preparation is particularly compatible with the conventional frozen food industry, such that individual pieces of skinned fish such as those which are available on the market can be used, which opens up new prospects and allows taking advantage of the new synergies between frozen food industry and the manufacturers of food grade salt.

### Example 1

In this embodiment, the food product is a piece of fish, specifically a skinned piece of salmon having an approximate weight of 125 gr. Hence, this variant of the invention is especially envisaged to allow cooking foods in individual portions by baking in a salt crust, which represents an advantage with respect to the conventional cooking because the pieces of food which are cooked in this manner tend to be large in size to compensate for the amount of preparation work that has to be done compared with the result obtained. It is common to avoid the preparation for cooking by baking in a salt crust for a single diner due precisely to the effort required.

The way of preparation and the result obtained are detailed below:
A first tray of a material suitable for being placed in an electric oven, a gas oven or a microwave oven is obtained, the dimensions of the sides of the tray being selected such that they reach a height slightly greater than that of the piece of fish to be prepared.

The tray is then filled with a bed of salt of approximately 1 cm thick.

The piece of fish, optionally covered by a layer of fat, is deposited on a first ovenable sheet formed by a cooking paper, such as an oiled paper or greaseproof or baking paper, provided with a series of regularly distributed perforations and having an approximate size of 1 mm².

The piece of fish is then covered with a second ovenable sheet and the tray is filled with salt added until covering the piece of fish and the second sheet completely with the exception of a cut portion configured like a tab.

The upper part of the salt is then lightly sprinkled with water, so that during the process of cooking in the oven a light, hard crust is produced in the upper part of the salt. If required, the film of water can be replaced with another substance, the use of egg white or other edible substances being contemplated.

Once all these operations are performed, the preparation in the tray is then hermetically closed using a sheet of transparent film or similar material which allows moving the preparation and keeping it in a suitable place without spoiling the presentation thereof.

Finally, the food preparation obtained is then subjected to the suitable preservation system, preservation by way of freezing being chosen for describing this variant of the invention.

## Claims

1. A food preparation (1) comprising a food product (2) housed in a closed and ovenable container (3), intended for being sold fresh, frozen or refrigerated, the food product (2) is embedded in salt (4), an ovenable sheet (5, 6) covering at least partially said product being arranged between the food product and the salt, the container is suitable for revealing or uncovering its content in the upper portion, **characterized in that** a portion (5a or 6a) of the sheet (5 or 6) covering the top of the food product (2) is accessible from the outside of the salt (4), said portion being able to be held with fingers for pulling it and lifting the layer of salt covering it in the upper portion for uncovering the food product (2).

2. The food preparation (1) according to claim 1, **characterized in that** the ovenable sheet (5) is perforated.

3. The food preparation (1) according to any one of the preceding claims, **characterized in that** the ovenable sheet (5) is configured like a bag, in which the food product (2) which is completely enclosed by said ovenable sheet is introduced.

4. The food preparation (1) according to any one of claims 1 or 2, **characterized in that** two ovenable sheets are used: a first lower sheet (5), placed below the food product (2) and on a layer of salt; and a second upper sheet (6), enveloping the surface of the food product (2) not covered by the first sheet (5).

5. The food preparation (1) according to claim 2, **characterized in that** before enclosing the food product (2) in the container a liquid is sprayed on the salt covering said food product (2), in order for a crust to form on the outer surface of the salt (4) during baking.

6. The food preparation (1) according to any one of the preceding claims, **characterized in that** the salt (4) comprises a mixture of coarse salt (4a) and fine salt (4b).

7. The food preparation (1) according to the preceding claim, **characterized in that** more than 70% of the grains of salt is greater than 1.6 mm.

8. The food preparation (1) according to any one of the preceding claims, **characterized in that** the food product (2) is selected from the group consisting of a frozen piece of skinned fish, a skinned whole fish, meat, cephalopods, seafood or vegetables.

9. The food preparation (1) according to any one of the preceding claims, **characterized in that** on the food product (2) there is applied a layer of animal or plant fat, on which the ovenable sheet (5, 6) is arranged.

10. The food preparation (1) according to any one of the preceding claims, **characterized in that** the container (3) is provided with means for collecting the salt (4) which is removed for uncovering the food product (2) for consumption.

11. The food preparation (1) according to the preceding claim, **characterized in that** the container (3) comprises an outer tray or receptacle (3a) in which an inner tray (3b) is arranged, on which the salt (4) and the food product (2) are deposited, the outer tray (3a) being suitable for collecting the salt (4') which is removed for uncovering the food product (2) for consumption.

12. The food preparation (1) according to any one of the preceding claims, **characterized in that** the container (2) and its content are frozen.

## Patentansprüche

1. Lebensmittelzubereitung (1) umfassend ein Lebensmittel (2), welches in einem geschlossenen und ofentauglichen Behälter (3) aufgenommen ist und welches dazu vorgesehen ist, frisch, gefroren oder gekühlt verkauft zu werden, wobei das Lebensmittel (2) von Salz (4) umhüllt ist, wobei eine ofentaugliche Folie (5), welche mindestens teilweise das genannte Produkt deckt, zwischen dem Lebensmittel und dem Salz angeordnet ist, wobei der Behälter dazu geeignet ist, dessen Inhalt im oberen Teil offenzulegen oder aufzudecken, **dadurch gekennzeichnet, dass** ein Teil (5a oder 6a) der Folie (5 oder 6), welcher das Lebensmittel (2) von oben deckt, von außen des Salzes (4) zugänglich ist, wobei der genannte Teil mit Fingern gehalten werden kann, um an ihm zu ziehen und die Schicht aus Salz, welche ihn im oberen Teil deckt, anzuheben, um das Lebensmittel (2) aufzudecken.

2. Lebensmittelzubereitung (1) nach Anspruch 1, **dadurch gekennzeichnet, dass** die ofentaugliche Folie (5) durchbohrt ist.

3. Lebensmittelzubereitung (1) nach einem der vorhergehenden Ansprüche, **dadurch gekennzeichnet, dass** die ofentaugliche Folie (5) wie eine Tasche ausgebildet ist, in welcher das Lebensmittel (2), welches von der genannten ofentauglichen Folie völlig umschlossen ist, eingeführt ist.

4. Lebensmittelzubereitung (1) nach einem der Ansprüche 1 oder 2, **dadurch gekennzeichnet, dass** zwei ofentaugliche Folien verwendet werden: eine erste untere Folie (5), welche unter dem Lebensmittel (2) und auf einer Salzschicht platziert ist; und eine zweite obere Folie (6), welche die Oberfläche des Lebensmittels (2), welche nicht von der ersten Folie (5) gedeckt ist, umhüllt.

5. Lebensmittelzubereitung (1) nach Anspruch 2, **dadurch gekennzeichnet, dass** vor dem Umschließen des Lebensmittels (2) im Behälter eine Flüssigkeit auf dem Salz, welches das genannte Lebensmittel (2) deckt, gesprüht wird, um eine Kruste auf der äußeren Oberfläche des Salzes (4) während des Backens zu bilden.

6. Lebensmittelzubereitung (1) nach einem der vorhergehenden Ansprüche, **dadurch gekennzeichnet, dass** das Salz (4) eine Mischung aus grobem Salz (4a) und feinem Salz (4b) umfasst.

7. Lebensmittelzubereitung (1) nach dem vorhergehenden Anspruch, **dadurch gekennzeichnet, dass** mehr als 70% der Salzkörner größer als 1,6 mm sind.

8. Lebensmittelzubereitung (1) nach einem der vorhergehenden Ansprüche, **dadurch gekennzeichnet, dass** das Lebensmittel (2) aus der Gruppe bestehend aus einem gefrorenen Stück von enthäutetem Fisch, einem ganzen enthäutetem Fisch, Fleisch, Kopffüßern, Meeresfrüchten oder Gemüsen ausgewählt wird.

9. Lebensmittelzubereitung (1) nach einem der vorhergehenden Ansprüche, **dadurch gekennzeichnet, dass** auf dem Lebensmittel (2) eine Schicht aus Tier- oder Pflanzenfett aufgetragen wird, auf welcher die ofentaugliche Folie (5, 6) angeordnet ist.

10. Lebensmittelzubereitung (1) nach einem der vorhergehenden Ansprüche, **dadurch gekennzeichnet, dass** der Behälter (3) mit Mitteln für das Sammeln des Salzes (4) versehen ist, welches für das Abdecken des Lebensmittels (2) für dessen Verzehr entfernt wird.

11. Lebensmittelzubereitung (1) nach dem vorhergehenden Anspruch, **dadurch gekennzeichnet, dass** der Behälter (3) eine äußere Schale oder ein äußeres Behältnis (3a) umfasst, in welcher/welchem eine innere Schale (3b) angeordnet ist, auf welcher das Salz (4) und das Lebensmittel (2) gelegt werden, wobei die äußere Schale (3a) dazu geeignet ist, das Salz (4'), welches für das Abdecken des Lebensmittels (2) für dessen Verzehr entfernt wird, zu sammeln.

12. Lebensmittelzubereitung (1) nach einem der vorhergehenden Ansprüche, **dadurch gekennzeichnet, dass** der Behälter (2) und dessen Inhalt gefroren sind.

## Revendications

1. Préparation alimentaire (1) comprenant un produit alimentaire (2) logé dans un conteneur fermé et de cuisson au four (3) destiné à être vendu frais, surgelé ou réfrigéré, le produit alimentaire (2) est incorporé dans du sel (4), une feuille de cuisson au four (5, 6) recouvrant au moins partiellement ledit produit étant disposé entre le produit alimentaire et le sel, le conteneur est approprié pour montrer ou découvrir son contenu dans la portion supérieure, **caractérisée en ce qu'**une portion (5a ou 6a) de la feuille (5 ou 6) recouvrant la partie supérieure du produit alimentaire (2) est accessible depuis l'extérieur du sel (4), ladite portion étant apte à être tenue entre les doigts pour la pousser et soulever la couche de sel la recouvrant dans la portion supérieure pour découvrir le produit alimentaire (2).

2. Préparation alimentaire (1) selon la revendication 1, **caractérisée en ce que** la feuille de cuisson au four (5) est perforée.

3. Préparation alimentaire (1) selon l'une quelconque des revendications précédentes, **caractérisée en ce que** la feuille de cuisson au four (5) est configurée comme un sac, dans lequel est introduit le produit alimentaire (2) qui est complètement enfermé par ladite feuille de cuisson au four.

4. Préparation alimentaire (1) selon l'une quelconque des revendications 1 ou 2, **caractérisée en ce que** l'on utilise deux feuilles de cuisson au four : une première feuille inférieure (5), située sous le produit alimentaire (2) et sur une couche de sel ; et une deuxième feuille supérieure (6) enveloppant la surface du produit alimentaire (2) non recouverte par la première feuille (5).

5. Préparation alimentaire (1) selon la revendication 2, **caractérisée en ce qu'**avant de renfermer le produit alimentaire (2) dans le conteneur on pulvérise un liquide sur le sel recouvrant ledit produit alimentaire (2), afin de former une croûte sur la surface extérieure du sel (4) pendant la cuisson.

6. Préparation alimentaire (1) selon l'une quelconque des revendications précédentes, **caractérisée en ce que** le sel (4) comprend un mélange de gros sel (4a) et de sel fin (4b).

7. Préparation alimentaire (1) selon la revendication précédente, **caractérisée en ce que** plus de 70% des grains de sel sont supérieurs à 1,6 mm.

8. Préparation alimentaire (1) selon l'une quelconque des revendications précédentes, **caractérisée en ce que** le produit alimentaire (2) est choisi parmi le groupe composé d'une pièce surgelée de poisson pelé, un poisson entier pelé, de viande, de céphalopodes, de fruits de mer ou de légumes.

9. Préparation alimentaire (1) selon l'une quelconque des revendications précédentes, **caractérisée en ce que** sur le produit alimentaire (2) est appliquée une couche de graisse animale ou végétale, sur laquelle est disposée la feuille de cuisson au four (5, 6).

10. Préparation alimentaire (1) selon l'une quelconque des revendications précédentes, **caractérisée en ce que** le conteneur (3) est pourvu de moyens de collecte du sel (4) qui est enlevé pour découvrir le produit alimentaire (2) pour sa consommation.

11. Préparation alimentaire (1) selon la revendication précédente, **caractérisée en ce que** le conteneur (3) comprend un plateau ou réceptacle extérieur (3a) dans lequel est disposé un plateau intérieur (3b), sur lequel sont déposés le sel (4) et le produit alimentaire (2), le plateau extérieur (3a) étant approprié pour collecter le sel (4') qui est enlevé pour découvrir le produit alimentaire (2) pour sa consommation.

12. Préparation alimentaire (1) selon l'une quelconque des revendications précédentes, **caractérisée en ce que** le conteneur (3) et son contenu sont surgelés.
